# EUROPÄISCHE PATENTSCHRIFT

(11) **EP 2 115 326 B1**
(45) Veröffentlichungstag und Bekanntmachung des Hinweises auf die Patenterteilung: **20.07.2011**
(21) Anmeldenummer: 07847905.2
(22) Anmeldetag: 06.12.2007
(51) Int. Cl.: F16H 48/10

(54) **STIRNRADDIFFERENZIAL**
SPUR GEAR DIFFERENTIAL
DIFFÉRENTIEL À ROUES DROITES

(30) Priorität: 31.01.2007 DE 102007004710
(43) Veröffentlichungstag der Anmeldung: 11.11.2009
(73) Patentinhaber: Schaeffler Technologies GmbH & Co. KG, 91074 Herzogenaurach (DE)
(72) Erfinder: BIERMANN, Thorsten, 96172 Mühlhausen (DE); JURJANZ, Ramon, 91058 Erlangen (DE)
(86) Internationale Anmeldenummer: PCT/EP2007/063428
(87) Internationale Veröffentlichungsnummer: WO 2008/092525

(56) Entgegenhaltungen:
- EP-A- 0 918 177
- EP-A- 1 717 485
- JP-A- 11 108 156
- US-A- 2 269 734
- US-A- 3 375 735
- HOEHN B-R ET AL: "KOMPAKTES ACHSGETRIEBE FUER FAHRZEUGE MIT FRONTANTRIEB UND QUER EINGEBAUTEM MOTOR" ATZ AUTOMOBILTECHNISCHE ZEITSCHRIFT, VIEWEG PUBLISHING, WIESBADEN, DE, Bd. 108, Nr. 1, Januar 2006 (2006-01), Seiten 46-51, XP001238419 ISSN: 0001-2785

## Beschreibung

### Gebiet der Erfindung

EP 0 918 177 A1 zeigt Stirnraddifferenziale des gattungsbildenden Standes der Technik. Die Erfindung betrifft ein Stirnraddifferenzial mit einem als Summenwelle ausgebildeten und um eine längs ausgerichtete Drehachse drehbaren Gehäuse und mit wenigstens drei um die Drehachse umfangsseitig zueinander beabstandeten Planetenrädern und mit einem Antriebsrad an dem Gehäuse, wobei
- das Gehäuse zumindest aus zwei aneinander befestigten Gehäuseabschnitten gebildet ist,
- jedes der Planetenräder längs beidseitig in den Gehäuseabschnitten gelagert ist,
- wenigstens einer der Gehäuseabschnitte topfförmig ausgebildet ist, wobei der Gehäuseabschnitt aus einem Topf mit einem gehäusestirnseitigen Boden, aus einer vom Boden abgehenden und um die Drehachse verlaufenden Wand gebildet ist
- jedes der Planetenräder längs an einer Seite an dem Boden des Topfes gelagert ist.

### Hintergrund der Erfindung

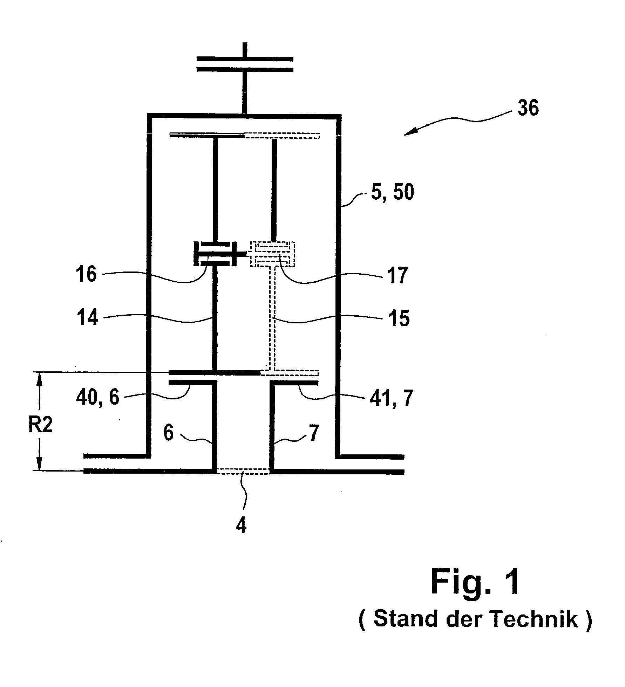

Das Schema des Differenzials des gattungsbildenden Standes der Technik ist zum besseren Verständnis nachfolgend in Figur 1 vereinfacht dargestellt und nachfolgend beschrieben. Das Prinzip entspricht einer Ausführung der in EP 0 918 177 A1 beschriebenen Differenziale, mit der sich im folgenden näher auseinander gesetzt wird.

Der Planetenträger beziehungsweise das Gehäuse als Planetenträger der gattungsbildenden Art ist die so genannte Summenwelle des Differenzials. Die Summenwelle ist das Glied, das jeweils die größten Drehmomente führt. Die Abtriebswellen sind mit den Abtriebsrädern drehfest gekoppelt und sind die so genannten Differenzwellen. Die Differenzwellen geben jeweils einen Differenzbetrag der in das Differenzial eingeleiteten Drehmomente beispielsweise an das angetriebene Fahrzeugrad weiter. In dem zuvor und nachfolgend beschriebenen gattungsbildenden Stand der Technik ist der Planetenträger 5 beziehungsweise das Gehäuse als Planetenträger 5 die Summenwelle 50 des Planetentriebs.

In EP 0 918 177 A1 sind entweder die Hohlräder oder die Sonnenräder als Abtriebsräder den Differenzwellen gleichgesetzt, da diese jeweils drehfest mit den Abtriebswellen verbunden beziehungsweise über weitere Übertragungsglieder mit diesen gekoppelt sind. Die Abtriebsräder werden deshalb im Folgenden auch als Differenzglieder bezeichnet.

Ein praktisches Beispiel des zuvor beschriebenen Stirnraddifferenzials ist in einem Fachaufsatz der ATZ 01/2006 "kompaktes Achsgetriebe für Fahrzeuge mit Frontantrieb und quer eingebautem Motor" der Autoren Höhn/Michaelis/Heizenröther beschrieben. Der Verbund aus dem Antriebsrad und dem Planetenträger wird darin mit zwei Varianten beschrieben. Die eine Variante wird als Leichtbauvariante bezeichnet, und sieht ein separat gefertigten Stirnrad vor, welches an den Träger mittels Laserschweißen gefügt ist. Die durch das Schweißen eingebrachte Wärme kann im ungünstigen Fall zu Verzug im Bauteil führen und kostenintensive Nacharbeit erfordern. Die andere Variante sieht vor, dass Planetenträger und Antriebsrad aus einem Stück durch Schmieden mit nachfolgender spanabhebender Fertigbearbeitung hergestellt wird. Derartige Ausführungen sind hinsichtlich der Menge des Materials für die Herstellung und aufgrund der aufwändigen Herstellung sehr teuer.

Ein Kriterium für die Beurteilung der Funktionsgenauigkeit eines Planetentriebes ist die Genauigkeit des Zahneingriffs der miteinander kämmenden Planetenpaarung Planeten - Sonne und Planeten - Hohlrad. Die Genauigkeit des Zahneingriffs wiederum ist über die üblichen Fertigungstoleranzen hinaus von Verlagerungen und Verformungen abhängig, die während des Betriebs des Stirnraddifferenzials auftreten.

Der Vorteil des Stirnraddifferenzials des Standes der Technik liegt in seiner leichten Bauweise aus Blech. Nachteilig kann sich jedoch das dünne Blech auf das anfangs erwähnte Verformungsverhalten des Planetentriebs auswirken. Demzufolge kann es auch wiederum nachteilig sein, wenn der Berührradius zu groß ist. Der Einsatz von dickerem Blech zur Kompensation der Verformungsanfälligkeit würde in einem solchen Fall die Vorteile des Leichtbaudifferenzials zumindest teilweise zunichte machen.

In EP 0 918 177 A1 und in dem genannten Fachaufsatz der ATZ wird der Ausführung des Stirnraddifferenzials, dessen Differenzglieder Hohlräder sind, gegenüber dem klassischen Kegelraddifferenzial und gegenüber Stirnraddifferenzialen 36 der Gattung nach Figur 1 der Vorzug gegeben, weil der Berührradius zwischen An- und Abtrieb im Stirnraddifferenzial, dessen Differenzglieder Hohlräder sind, bei gleichen radialen Außenabmessungen größer ist als der Berührradius R2 im Stirnraddifferenzial 36.

Das Stirnraddifferenzial 36 weist das Antriebsrad 2 auf, welches in diesem Fall als Tellerrad ausgebildet ist. Außerdem ist das Stirnraddifferenzial 36 aus einem zweiteiligen Gehäuse als Summenwelle 50 zusammengehalten, in dem Planetenräder auf Planetenbolzen (auch als Lagerzapfen bezeichnet) und zwei Sonnenräder 40 und 41 als Abtriebsräder 6 und 7 angeordnet sind.

Das Gehäuse ist durch einen topfförmigen Gehäuseabschnitt und einen scheibenförmigen Abschnitt gebildet. Jeder der Gehäuseabschnitte weist Aufnahmen für die Planetenbolzen auf. Der topfförmige Gehäuseabschnitt ist mit einem Radialflansch versehen, an dem gemäß EP 0 918 177 A1 der topfförmige Gehäuseabschnitt und der scheibenförmige Abschnitt verschraubt oder verschweißt sind. Das Antriebsrad sitzt radial auf dem topfförmigen Gehäuseabschnitt.

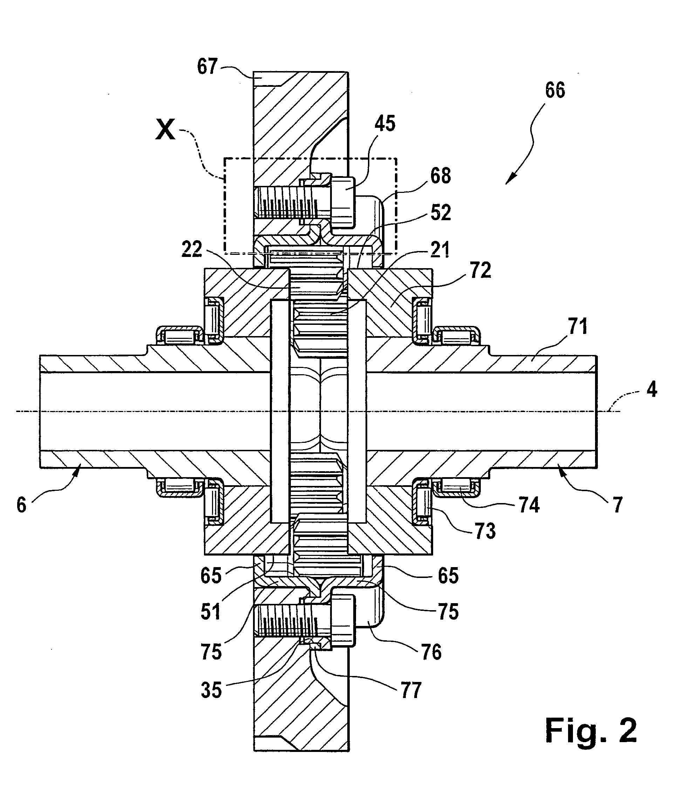

Die Planetenräder 14 und 15 sind wieder paarweise angeordnet, wobei jeweils ein Planetenrad 14 mit einem Planetenrad 15 ein Paar bildet und auch mit diesen verzahnt ist. In Figuren 1 ist der gegenseitige Eingriff der Planetenräder ineinander durch die gestrichelten Linien symbolisiert. Die Planetenräder 14 stehen gleichzeitig mit dem Sonnenrad 40 im Eingriff und die Planetenräder 15 mit dem Sonnenrad 41. Das Stirnraddifferenzial 36 weist keine Hohlräder auf. Abtriebsräder und somit Differenzglieder sind die Sonnenräder 40 und 41. Der Berührradius R2 ist in Figur 2 dem Achsabstand zwischen den Bolzenachsen 16 beziehungsweise 17 und der Drehachse 4 der Abtriebsräder gleichzusetzen und von den radialen Abmessungen der jeweiligen Paarung Planetenrad mit dem jeweiligen Sonnenrad 40 oder 41 abhängig.

Der Bauraum, der derartigen Differenzialen am Fahrzeug zur Verfügung steht, ist in der Regel gering, so dass die Differenziale relativ kleine äußeren Abmessungen aufweisen sollen. Die Fähigkeit Drehmomente zu übertragen wird dagegen, wie auch in EP 0 918 177 A1 beschrieben ist, außer von den Kriterien Zahnbreite, Geometrie und weiteren im wesentlichen von dem mittleren Berührradius bestimmt. Je größer der Berührradius ist, umso höher ist, vorbehaltlich des anfangs erwähnten Einflusses aus der Verformungsanfälligkeit, der Betrag übertragbaren Momente.

Auch wenn das in EP 0 918 177 A1 als Vorzugsvariante beschriebene Stirnraddifferenzial, dessen Planeten in Hohlräder eingreifen, aufgrund des außen liegenden Zahneingriffs zwischen Planeten und Abtrieb und damit hinsichtlich seiner Kapazität Drehmomente zu übertragen gegenüber einem abmessungsgleichen klassischen Kegelraddifferenzial beziehungsweise gegenüber der mit Figur 1 beschriebenen Variante an sich im Vorteil ist, ist es nach wie vor Ziel, die Differenziale so leicht und klein wie möglich und sehr hoch belastbar zu gestalten.

Die Bolzenachsen der Planetenbolzen eines Paares liegen umfangsseitig hintereinander. Wie viele Paare der Planetenräder umfangseitig angeordneten werden können, hängt von dem umfangsseitigen Abstand ab, der durch die Abmessungen der Planetenräder vorgegeben ist und der auch maßgeblich von der Gestaltung der Lagerstellen für die Planetenräder und von deren Umgebungskonstruktion abhängig ist.

Das in EP 0 918 177 A1 beschriebene Differenzial und das dazugehörige im vorgenannten Fachaufsatz umgesetzten Praxisbeispiel weisen jeweils drei symmetrisch am Umfang verteilte Paare Planetenräder auf - es wird jedoch in EP 0 918 177 A1 darauf verwiesen, dass bei höheren durch das Differenzial zu übertragenden Momenten mehr als drei Paare eingesetzt werden können. Sowohl der Einsatz von mehr als drei Paaren als auch die Übertragung von hohen Drehmomenten ist hinsichtlich des zur Verfügung stehenden Bauraums in den Anordnungen beider Ausführungen des Standes der Technik nach EP 0 918 177 A1, Figur 1 schwierig. Hinzu kommen *bei* Leichtbaudifferentialen aus Blech die zuvor beschriebenen durch Verformungen bestimmten Belastungsgrenzen des Planetenträgers aus Blech. Sollen derartige Differenziale für höhere Belastungen ausgelegt werden, wird entsprechend mehr Bauraum benötigt. Das Differential wird schwerer und teurer. Deshalb sind diese Typen des gattungsbildenden Standes der Technik vorzugsweise in Differenzialen eingesetzt, mit denen relativ geringe Drehmomente übertragen werden müssen.

Wie anfangs erwähnt, ist auch die Zahnbreite ein Kriterium für die Höhe des übertragbaren Drehmoments. Je breiter der Zahneingriff ist, um so höhere Momente können übertragen werden. Durch breiter gestalteten Zahneingriff, benötigen die Differentiale längs, also axial, mehr Bauraum und werden somit insgesamt schwerer und teurer.

In den zuvor beschriebenen Stirnraddifferenzialen kämmen die Planetenräder eines Paares miteinander. Gleichzeitig steht jedes der Planetenräder eines Paares im verzahnenden Eingriff mit einem anderen Differenzglied als das andere Planetenrad der Paarung. Wenn in diesem Differenzial eins oder beide Planetenräder mit beiden Differenzgliedern (beispielsweise zugleich mit beiden Sonnenrädern) im Eingriff stehen würde, wäre der Ausgleich im Differenzial blockiert. Bei der Auslegung des Planetentriebes ist deshalb ausreichend Freiraum für die Verzahnung jeder der beiden Differenzglieder für sich gegenüber demjenigen Planetenrad vorzusehen, mit dem die Verzahnung dem jeweiligen Differenzglied nicht im Eingriff stehen darf. In dem Differenzial nach EP 09 918 177 A1, dessen Schema mit Figur 1 dargestellt ist, ist dafür ausreichend axialer Bauraum zwischen den Zahneingriff zur jeweiligen Sonne vorgesehen, indem das Planetenrad um den Betrag des axial benötigten Bauraums länger ist. Eine derartige Anordnung erfordert durch das axial längere Planetenrad zusätzlichen axialen Bauraum.

### Aufgabe der Erfindung

Die Aufgabe der Erfindung ist es daher, Stirnraddifferenziale zu schaffen, die geringen Bauraum für sich beanspruchen und mit denen trotzdem hohe Drehmomente zu übertragen werden können und die sich einfachen kostengünstig herstellen lassen.

### Beschreibung der Erfindung

Diese Aufgabe ist mit einem Stirnraddifferenzial gelöst, bei dem umfangsseitig zwischen den einzelnen Paaren der Planetenräder, Bauraum für die Verbindung der Gehäuseabschnitte genutzt wird.

*Diese Aufgabe ist durch den Gegenstand des Anspruches 1 gelöst.*

Die Wand des Topfes weist an wenigstens zwei radial nach innen gewölbte Wandabschnitte auf, die radial jeweils zumindest teilweise in eine Umfangslücke zwischen zwei umfangsseitig benachbarten der Planetenrädern eintauchen, wobei zumindest in der Umfangslücke jeweils ein Flanschabschnitt radial von den gewölbten Abschnitten abgeht, und wobei von dem Antriebsrad radial nach innen abgehende Befestigungsabschnitte zumindest teilweise radial in die Umfangslücke eintauchen und an dem Flanschabschnitt fest sind.

Das Gehäuse zumindest ist aus zwei aneinander befestigten Gehäuseabschnitten gebildet. Einer der Gehäuseabschnitte kann dabei napf- bzw. topfförmig ausgebildet sein und der andere deckelartig. Vorzugsweise sind jedoch beide Gehäuseabschnitte topfartig ausgebildet und Gleichteile.

Die Wand des Topfes, die um die Drehachse verläuft, weist wenigstens zwei radial nach innen gewölbte Wandabschnitte auf, dass heißt die Wand ist an diesen Stellen nach innen in Richtung Drehachse eingezogen bzw. eingewölbt - und zwar in die Umfangslücke zwischen zwei umfangsseitig benachbarten Planetenrädern. Dabei gehören die an der Umfangslücke zueinander benachbarten Planetenräder jeweils vorzugsweise zu einem Planetenpaar von zwei miteinander kämmenden Planetenrädern. Die bevorzugte Ausführung sieht vier der Planeten paare und somit vier der zumindest teilweise radial in die Umfangslücken eingreifenden Befestigungsabschnitte vor.

Die Verbindung der Gehäuseabschnitte untereinander wird steifer, so dass das ganze Differenzial steifer und weniger anfällig gegen Verformungen und Verlagerungen ist. Außerdem wird unter Umständen weniger radialer Bauraum für das Antriebsrad bzw. für seine Befestigung am Gehäuse benötigt, da die Befestigung radial nach innen zumindest teilweise zwischen die Planeten verlagert wurde.
(1) Der kleinste Lochkreis für Durchgangslöcher oder Zapfen einer Flanschverbindung ist größer als der größte Hüllkreis der radial am weitesten von der Drehachsen entfernten Planetenräder.
(2) Alternativ dazu ist der Durchmesser des größten Lochkreises immer noch kleiner als der größte Hüllkreis um die Planetenräder, d.h. die Löcher der Flanschverbindung sind ganz oder teilweise umfangsseitig zwischen den einzelnen Planetenpaaren innerhalb des Hüllkreises Ausgebildet.
(3) Das Gehäuse ist durch einen topfförmigen Gehäuseabschnitt und einen scheibenförmigen Abschnitt gebildet.
(4) Sowohl der topfförmige Gehäuseabschnitt und der scheibenförmige Abschnitt sind vorzugsweise Kaltumformteile, z. B. Zieh- und Stanzteile aus dünnem Blech, in die die Aufnahmen für die Planetenräder und auch für die Differenzglieder eingebracht sind. Derartige Bauteile lassen sich kostengünstig herstellen.
(5) Alternativ dazu ist das zweiteilige Gehäuse aus zwei vorzugsweise identischen Gehäuseabschnitten gebildet, die beide topfförmig sind und beide Flansche zur Befestigung aneinander aufweisen.
(6) Die Flansche weisen Durchgangslöcher auf, durch die Schraubenelemente wie Stehbolzen oder Schrauben hindurch greifen.
(7) An einem der Gehäuseabschnitte sind anstelle der Durchgangslöcher umfangsseitig zylindrische Führungszapfen ausgebildet. Die vorzugsweise innen hohlzylindrischen Führungszapfen stehen axial aus dem Flansch hervor.
(8) Jeder Führungszapfen steckt jeweils in einem Durchgangsloch eines Lochflansches an dem anderen der Gehäuseabschnitte. Die im Querschnitt betrachtete Innenkontur des Durchgangsloches in dem Lochflansch korrespondiert passgenau mit der Außenkontur des Führungszapfens.
(9) Der eine Gehäuseabschnitt sitzt mit dem Lochflansch auf dem Führungszapfen und ist auf diesem zentriert.
(10) Ein Verbindungselement greift vorzugsweise in den längs durch den Führungszapfen hindurch entweder in ein Gewinde in dem Antriebsrad hinein oder ist alternativ verschraubt bzw. vernietet. Alternativ oder zusätzlich dazu kann die Schraub- oder Nietverbindung auch separat zu den Führungszapfen an anderer Stelle angeordnet sein.
(11) Die Durchgangslöcher oder Zapfen einer Flanschverbindung sind entweder auf einem gemeinsamen Lochkreis oder einzeln auf sich voneinander im Durchmesser unterscheidenden Lochkreisen angeordnet.

Der Lochkreis ist ein gedachter Kreis, dessen Zentrum von der Drehachse senkrecht durchstoßen wird und auf dessen Kreislinie die parallel zur Drehachse ausgerichtete Mittelachse mindestens eines der Durchgangslöcher der Flanschverbindung liegt. In einer Flanschverbindung sind zumeist mehrere Mittellinien von Durchgangslöchern auf einem gemeinsamen Lochkreis angeordnet. Es ist jedoch auch denkbar, dass umfangsseitig zueinander benachbarte der Durchgangslöcher einer Flanschverbindung mit unterschiedlichen radiale in Abständen zur Drehachse in dem Flansch eingebracht sind, so dass diese zwangsläufig unterschiedliche Lochkreise zueinander aufweisen.

Der Hüllkreis um die Planetenräder ist ein gedachter Kreis, dessen Zentrum senkrecht von der Drehachse durchstoßen wird und der außen um die umfangsseitig zueinander beabstandeten Planetenräder gelegt ist. Dabei umfasst der Hüllkreis mindestens zwei umfangsseitig zueinander benachbarte Planetenräder, deren Bolzenachsen radial gleich weit von der Drehachse entfernt sind. Der größte Hüllkreis ist demnach der Hüllkreis, der die Planetenräder außen umfasst, die radial am weitesten von der Drehachse entfernt sind.

Gehäuseabschnitte mit den Merkmalen (5) bis (11) sind über die Zapfenführung, insbesondere umfangsseitig, aneinander abgestützt, so dass die Schraubverbindung von umfangsseitigen Belastungen aus Drehmomenten (Scherbeanspruchung) frei ist. Die Anzahl der Befestigungselemente, wie Schraubenelemente oder Nieten kann reduziert werden.

Die Planetenräder und Sonnenräder sind in dem erfindungsgemäßen Differenzial wie folgt beschrieben ausgebildet und angeordnet:
a. Jedes Planetenpaar weist zwei Planetenräder auf, die vorzugsweise identisch als Gleichteile gestaltet sind.
b. Die Planetenräder weisen jeweils einen außenzylindrischen nicht verzahnten Abschnitt und längs daneben einen verzahnten Abschnitt auf.
c. Die radialen äußeren Abmessungen (Außenradius) des nicht verzahnten Abschnitts sind geringer als die kleinstmöglichen radialen äußersten Abmessungen (beispielsweise Kopfkreisradius) des verzahnten Abschnitts. Dabei ist der Außendurchmesser des nicht verzahnten Abschnitts mindestens kleiner als der Zahnkopfdurchmesser vorzugsweise aber gleich oder kleiner als der Zahnfußdurchmesser des verzahnten Abschnitts.
d. Der verzahnte Abschnitt der betrachteten Planetenräder ist als Stirnverzahnung wie Geradverzahnung, Schrägverzahnung, Keilverzahnung oder schraubenförmige Verzahnung ausgebildet.
e. Jedes der Planetenräder sitzt entweder auf einem separaten Planetenbolzen, oder ist auf zwei Zapfen aufgenommen beziehungsweise weist selbst zwei axial aus dem Planetenrad hervorstehende Zapfen auf.
f. Der Planetenbolzen oder das Planetenrad mit Zapfen beziehungsweise das Planetenrad auf Zapfen ist beidseitig in oder an dem Gehäuse gelagert.
g. Die Zapfen, mit denen das jeweilige Planetenrad alternativ aufgenommen ist, sind entweder einteilig mit einem Blechgehäuse ausgebildet oder als separate Bauteile in dieses eingebracht.
h. Alternativ zu vorgenannten Ausführungen der Lagerung der Planetenräder sind ein oder mehrteilige Zapfen einmaterialig mit dem Planetenrad ausgebildet oder separat an dem jeweiligen Planetenrad befestigte Elemente.
i. Das Planetenrad ist in diesen Fällen entweder drehbar auf den Zapfen oder auf dem Planetenbolzen um die Bolzenachse oder mit dem Bolzen gelagert.
j. Die nicht verzahnten Abschnitte der Planetenräder weisen längs in entgegengesetzte Richtung, so dass die Stirnseiten der nicht verzahnten Abschnitte jeweils längs nach außen, vorzugsweise zur Lagerung der Planetenbolzen im Gehäuse hin, weisen.
k. Jedes der Planetenräder eines Paares greift jeweils mit einem in Längsrichtung am Planetenrad außen liegenden Teilabschnitt seines verzahnten Abschnitts in die Verzahnung eines anderen der beiden Differenzglieder des Differenzials ein.
l. Der außen liegende Abschnitt (äußerer Teilabschnitt) geht in Längsrichtung des Planetenrades betrachtet, also gleichgerichtet mit der Bolzenachse, von einem Ende des Planetenrades aus bis an einen, in Längsrichtung mittleren Teilabschnitt der Verzahnung.
m. Die Breite des äußeren Teilabschnitts, mit dem das jeweilige Planetenrad in die Innen- beziehungsweise Außenverzahnung des Differenzglieds eingreift, entspricht vorzugsweise der Hälfte der Breite der Verzahnung in Längsrichtung des verzahnten Abschnitts.
n. In die Umfangslücke eines jeden Planetenrads eines Paares, die um den nicht verzahnten Abschnitt ausgebildet ist, taucht jeweils die Verzahnung jenes Differenzglieds der zwei Differenzglieder radial und axial berührungslos ein, welches mit dem äußeren Teilabschnitt der Verzahnung des anderen Planetenrades des gleichen Paares kämmt.
o. Die Umfangslücke ist axial in die eine Längsrichtung durch den längs innen liegenden mittleren Teilabschnitt der Verzahnung und in die andere Längsrichtung beispielsweise durch das Gehäuse oder durch einen anderen Axialanschlag für das Planetenrad begrenzt.
p. Die Planetenräder eines Paares stehen jeweils an dem mittleren Teilabschnitt des verzahnten Abschnitts miteinander im Eingriff.
q. Der mittleren Teilabschnitt ist in Längsrichtung zwischen dem äußeren Teilabschnitt der Verzahnung und dem nicht verzahnten Abschnitt ausgebildet.
r. Typ und die Abmessung der Verzahnung des äußeren Abschnitts können sich an dem mittleren Abschnitt fortsetzen alternativ aber auch andere sein.
s. Die Breite des mittleren Teilabschnitts, an dem die Planetenräder miteinander verzahnt sind, ist vorzugsweise die andere Hälfte der Breite der Verzahnung in Längsrichtung des verzahnten Abschnitts.
t. Pro Differenzial sind mindestens drei, vorzugsweise jedoch vier oder fünf Stück der Paare angeordnet.

Die Längsrichtung ist mit den Bolzenachsen gleich. Wenn zuvor und hiernach der Begriff Zahnbreite und gleichbedeutendes verwendet wird, ist die mit der Bolzenachse gleichgerichtete Abmessung der Verzahnung gemeint.

Jedes dieser Planetenräder weist den nicht verzahnten Abschnitt auf, damit in diesen Stirnraddifferenzialen jedes der Planetenräder eines Paares nicht mit beiden Differenzgliedern (mit beiden Sonnenrädern oder Hohlrädern) zugleich im Eingriff steht.

Aus den zuvor genannten Merkmalen folgt:
u. Die erforderliche Gesamtbreite des verzahnten Abschnitts eines jeden der Planetenräder ist vorzugsweise die Summe aus der Breite des Differenzglieds, das im Zahneingriff mit dem Planeten und steht und aus der Breite des Teilabschnitts der Verzahnung, mit dem die Planetenräder des gleichen Paares miteinander kämmen - höchstens noch zuzüglich fertigungs-, montage- bzw. gestaltungsbedingter Abstände, Fasen, Abstandshalter und ähnlichem.
v. Die erforderliche Breite des nicht verzahnten Abschnitts des Planetenrades entspricht bevorzugt der Breite der Verzahnung des Differenzglieds, welches mit dem anderen Planetenrad des gleichen Paares kämmt - höchstens noch zuzüglich fertigungs-, montage- bzw. gestaltungsbedingter Abstände, Fasen, Abstandshalter und ähnlichem.
w. Die Verzahnung des Differenzgliedes taucht möglichst soweit in die Umfangslücke ein, dass sich das Differenzglied und das betreffende Planetenrad gerade noch nicht berühren.

Die Zahnbreite für den Zahneingriff der miteinander verzahnten Bauteile der erfindungsgemäßen Differenziale ist breiter als die des bisherigen gattungsbildenden Stands der Technik gleicher Außenabmessungen - denn, die Planetenräder sind im Paar miteinander und mit den Differenzgliedern ohne weitere axiale Lücken verschachtelt. Höhere Drehmomente sind übertragbar. Die Planetenräder sind nicht an einem gesonderten längst mittig im Differenzial angeordneten Planetenträger sondern beidseitig im als Planetenträger fungierenden Gehäuse gelagert. Durch die zwei Lagerstellen anstelle nur einer ist die Konstruktion steifer und weniger anfällig gegen Verkippung und somit weniger anfällig gegen die durch Verkippung entstehenden Nachteile.

Die Paare eines Planetentriebs können umfangsseitig näher aufeinander gerückt werden, da zum einen die Belastungen pro Planeten auf jeweils zwei Lagerstellen im oder am Gehäuse verteilt werden und zum anderen die Gehäusekonstruktion an sich schon stabiler ist als dies ein mittig angeordneter scheibenförmiger Planetenträger aus Blech ist. Der Bauraum, der umfangseitig zwischen den einzelnen Lagerstellen für stützendes Material zur Verfügung stehen muss, ist gering. Der für einen mittig angeordneten Planetenträger benötigte axiale Bauraum entfällt durch die Lagerung im Gehäuse. Die Verzahnung kann um diesen Betrag zusätzlich breiter ausgeführt werden. Damit kann auch wieder der Berührradius verringert und auf die steifere Anordnung und somit gegen Verformungen weniger anfälliger Konstruktion wie die nach Figur 2 mit dem Eingriff der Planetenräder in Sonnenräder zurückgegriffen werden. Die Herstellung des Planetentriebs ist kostengünstiger, da die aufwändige Herstellung der Hohlräder entfällt. Aufwändig ist zum Beispiel die Innenbearbeitung der Innenverzahnung.

Sowohl die Gehäuseabschnitte, als auch die Sonnenräder sind auf einer gemeinsamen Drehachse des Differenzials koaxial zueinander angeordnet. Die Sonnenräder sind um die Drehachse wahlweise mit Gleitlagerungen oder mit Wälzlagerungen in dem Gehäuse drehbar gelagert. Das Gehäuse selbst ist gegenüber der Umgebungskonstruktion um die Drehachse vorzugsweise wälzgelagert, kann aber auch gleitgelagert sein.

Weitere Ausgestaltungen der Erfindung betreffen das Antriebsrad und dessen Befestigung auf dem Gehäuse gemäß nachfolgender Merkmale und beliebigen sinnvollen Kombinationen dieser:
i. Das Antriebsrad ist vorzugsweise ein Stirnrad mit Stirnverzahnung beliebigen Typs alle denkbaren Ausführungen.
ii. Das Antriebsrad ist alternativ ein Zahnring, der mit seinem Innenumfang zumindest teilweise auf einem außenkonische oder außenzylindrischen Abschnitt, vorzugsweise dem topfförmige Gehäuseabschnitt, sitzt.
iii. Der Zahnring ist axial an dem Radialflansch abgestützt.
iv. Der Sitz ist entweder mit einer Spielpassung, Übergangspassung oder Presspassung ausgeführt beziehungsweise durch die konische Verbindung selbst gehemmt.
v. Der Zahnring ist alternativ oder zusätzlich zu den vorgenannten Merkmalen iii. bis iv. auf dem Gehäuse durch Stoffschluss wie Schweißen befestigt beziehungsweise mittels einer Schraubverbindung gesichert.
vi. Die Schraubverbindung ist vorzugsweise gleichzeitig für die Verbindung der beiden Gehäuseteile miteinander vorgesehen.
vii. Der Zahnring weist alternativ zu der zuvor mit den Merkmalen i. bis vi. beschriebenen Variante zwei sich im Durchmesser voneinander unterscheidende Innenumfangsflächen auf.
viii. Die Innenumfangsfläche mit dem größeren Innendurchmesser sitzt auf mindestens einem Radialflansch eines der Gehäuseabschnitte.
ix. Die Innenumfangsfläche mit dem kleineren Innendurchmesser sitzt auf einem der Gehäuseabschnitte.
x. Der Zahnring stützt sich mit einer zwischen den beiden Innenumfangsflächen radial ausgerichteten Kreisringfläche an einem Radialflansch ab.
xi. Von der Kreisringfläche gehen axial Gewindebohrungen mit Innengewinde aus, in die entweder jeweils ein Stehbolzen oder eine Schraube zur Befestigung des Zahnrings an dem Gehäuse und/oder zur Befestigung der Gehäuseabschnitte aneinander eingeschraubt ist.
xii. Für alle zuvor genannten Ausführungen sind alternativ an einem der Gehäuseabschnitte oder wechselseitig an beiden Gehäuseabschnitten anstelle der Durchgangslöcher umfangsseitig zylindrische Führungszapfen angeordnet. Die innen hohlzylindrischen Führungszapfen stehen axial aus dem Flansch in Richtung des anderen Gehäuseabschnitts hervor.
xiii. Jeder Führungszapfen greift jeweils in ein Durchgangsloch eines gegenüberliegenden Lochflansches an dem anderen Gehäuseabschnitt ein. Die Außenkontur des Führungszapfens korrespondiert so mit der Innenkontur des Durchgangsloches, dass der Führungszapfen eng in dem Durchgangsloch geführt ist. Der Gehäuseabschnitt ist über mehrere am Umfang verteilte der Führungszapfen in den Durchgangslöchern des anderen Gehäuseabschnitts zur Drehachse und zu dem anderen Gehäuseabschnitt konzentrisch zentriert.
xiv. An dem Antriebsrad ist ein weiterer Führungszapfen ausgebildet. Der weitere Führungszapfen ist zumindest in seiner Außenkontur zu dem Führungszapfen am Gehäuseabschnitt identisch und greift von der anderen Seite axial in das Durchgangsloch ein. Das Antriebsrad ist über mehrere am Umfang verteilte der weiteren Führungszapfen in den Durchgangslöchern zur Drehachse und zu dem Gehäuse konzentrisch zentriert. Jeweils ein Befestigungsmittel durchgreift die hohlen Führungszapfen und hält die Elemente axial aneinander.
xv. Jeder Führungszapfen greift jeweils durch ein Durchgangsloch eines Lochflansches an dem anderen der Gehäuseabschnitte hindurch in ein Führungsloch des Zahnrings ein. Die im Querschnitt betrachtete Innenkontur des Führungslochs in dem Zahnring korrespondiert passgenau mit der Außenkontur des Führungszapfens. Zahnring und Gehäuse sind zueinander konzentrisch zur Drehachse zentriert.
xvi. In dem Führungsloch folgt auf den Führungsabschnitten ein Innengewinde oder ein Durchgangsloch für die axiale Befestigung der Gehäuseabschnitte mit dem Zahnring mittels Schraub- oder Nietverbindung.
xvii. Der Führungszapfen ist einteilig mit dem Flansch des betreffenden Gehäuseabschnitts aus dessen Material ausgebildet.
xviii. Der Führungszapfen ist eine separate Hülse, die vorzugsweise mittels Presssitz und/oder Stoffschluss an dem Flansch des betreffenden Gehäuseabschnitts befestigt ist.

In das Antriebsrad eingeleitete Drehmomente werden von dem Antriebsrad über die Führungszapfen direkt an die Gehäuseabschnitte weitergegeben, ohne dass die Verbindungselemente durch Scherkräfte belastet sind. Die Differenziale sind auch deshalb mit wesentlich höheren Drehmomenten belastbar.

Weitere Ausgestaltungen der Erfindung betreffen nachfolgend beschriebene Ausführungen der Sonnenräder:
I. Die Sonnenräder sind hinsichtlich ihrer Gestalt vorzugsweise Gleichteile.
II. Die Sonnenräder sind aus zwei hohlzylindrischen Abschnitten gebildet, die sich in ihren radialen Außenabmessungen voneinander unterscheiden.
III. Der hohlzylindrische Abschnitt mit den radial größeren Außenabmessungen weist stirnseitig umlaufend eine Verzahnung für den Eingriff in Planetenräder auf.
IV. Die Sonnenräder sind jeweils mit einer Flanke in Längsrichtung axial an jeweils einem Gehäuseabschnitt mittels Gleitlagerung oder Wälzlagerung um die Drehachse des Stirnraddifferenzials drehbar gelagert. Die Flanke erstreckt sich radial zwischen der Außenverzahnung und dem hohlzylindrischen Abschnitt mit den radial kleineren Außenabmessungen.
V. Jedes der Sonnenräder ist radial jeweils in einer hohlzylindrischen Aufnahme eines der Gehäuseabschnitte mittels Gleit- oder Wälzlagerung um die Drehachse des Stirnraddifferenzials drehbar gelagert.
VI. Die Sonnenräder sind Gleichteile, d.h., ihre Konstruktion und Abmessungen sind gleich.
VII. Die Sonnenräder sind einteilig ausgebildet.
VIII. Die Sonnenräder sind alternativ zu Merkmal VII zusammengesetzte Bauelemente aus einem Zahnring auf einem Grundkörper, wobei der Zahnring vorzugsweise der Abschnitt mit dem größeren radialen Abmessungen und der Grundkörper der hohlzylindrische Zahnring mit den kleineren radialen Abmessungen ist.
IX. In die Sonnenräder sind alternativ und/oder gleichzeitig zu den Merkmalen I bis VIII Elemente von Antriebsgelenken, beispielsweise die Glocken (Außengehäuse) mit Laufbahnen, für z. B. Tripoderollen, integriert.

### Kurze Beschreibung der Zeichnungen

Gattungsbildender Stand der Technik ist auch anhand der Figuren 1 im Kapitel Gebiet der Erfindung am Anfang dieses Dokuments und Ausführungsbeispiele der Erfindung sind ab Figur 2 wie folgt beschrieben:
- Figur 1: zeigt das Prinzip eines Stirnraddifferenzials des der Erfindung zu Grunde liegenden Standes der Technik, bei dem die Differenz- glieder Sonnenräder sind, schematisch,
- Figur 2: ein Ausführungsbeispiel eines erfindungsgemäßen Stirnraddiffe- renzials, längs entlang der Drehachse geschnitten dargestellt,
- Figur 3: eine Frontalansicht des Stirnraddifferenzials nach Figur 2,
- Figur 4: die Anordnung eines Paares von Planetenrädern im Stirnraddiffe- rential, nicht maßstäblich und vergrößert,
- Figur 4a: ein Ausführungsbeispiel eines Planetenrads, als Einzelteil darge- stellt,
- Figur 4b: ein weiteres Ausführungsbeispiel eines Planetenrads, als Einzel- teil dargestellt
- Figur 5: das Planetenpaar nach Figur 4 entlang der Linie V-V quer ge- schnitten,
- Figur 6: das Planetenpaar nach Figur 4 entlang der Linie VI-VI quer ge- schnitten,
- Figur 7: das Planetenpaar nach Figur 4 entlang der Linie VIII-VIII quer geschnitten,
- Figur 8: die Verbindung der Gehäuseabschnitte mit dem Antriebsrad an- hand des Details X aus Figur 2 vergrößert und nicht maßstäblich,
- Figur 9: das Detail X aus Figur 2 vergrößert und nicht maßstäblich mit einer zu der nach Figur 8 alternativ gestalteten Verbindung,
- Figur 10: das Detail X aus Figur 2 vergrößert und nicht maßstäblich mit einer zu der nach Figur 8 weiteren alternativ gestalteten Verbin- dung

### Ausführliche Beschreibung der Zeichnungen

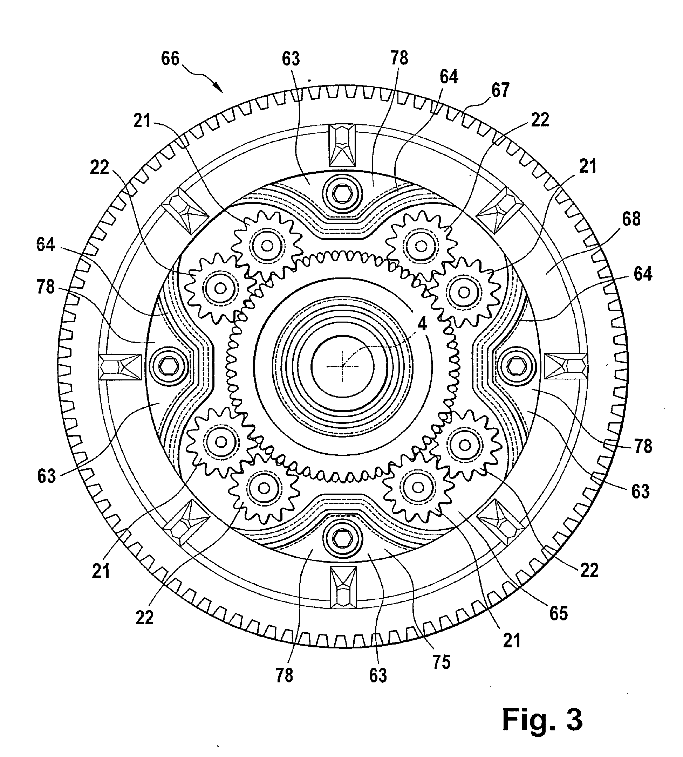

Das Stirnraddifferential 66 nach Figur 2 ist mit einem Antriebsrad 67 versehen und weist ein zweiteiliges Gehäuse 68 auf. In dem Gehäuse 68 sind die Planetenräder 21 und 22 paarweise angeordnet. Wie aus Figur 3 ersichtlich ist, weist das Stirnraddifferential 66 vier Stück der Paare auf. Die Planetenräder 21 und 22 stehen im Zahneingriff mit Verzahnungen 51 beziehungsweise 52 an Sonnenrädern 69 und 70. Die Sonnenräder 69 und 70 sind die Abtriebsräder 6 und 7 und somit die Differenzglieder des Planetentriebs. Die Abtriebsräder 6 und 7 sind separat zueinander um die Drehachse 4 drehbar gelagert und sind mit nicht dargestellten Gelenkwellen verbunden.

Die Sonnenräder 69 und 70 sind Gleichteile. Jedes Sonnenrad 69 beziehungsweise 70 ist zweiteilig aus einem hohlzylindrischen Abschnitt 71 und einem hohlzylindrischen Abschnitt 72 gebildet. Die radialen Abmessungen des hohlzylindrischen Abschnitts 71 sind kleiner als die radialen Abmessungen des hohlzylindrischen Abschnitts 72. Der hohlzylindrische Abschnitt 72 ist ein Zahnring entweder mit Außenverzahnung 51 oder 52. Der Zahnring ist auf den hohlzylindrischen Abschnitt 71 aufgepresst und/oder in anderer geeigneter Weise form- , kraft- und/oder stoffschlüssig befestigt. An dem jeweiligen Sonnenrad 69 beziehungsweise 70 sind Laufbahnen für Wälzlager 73 und 74 ausgebildet. Das Wälzlager 73 ist für die axiale Lagerung des jeweiligen Sonnenrades 69 beziehungsweise 70 und das Wälzlager 74 ist ein Radiallager.

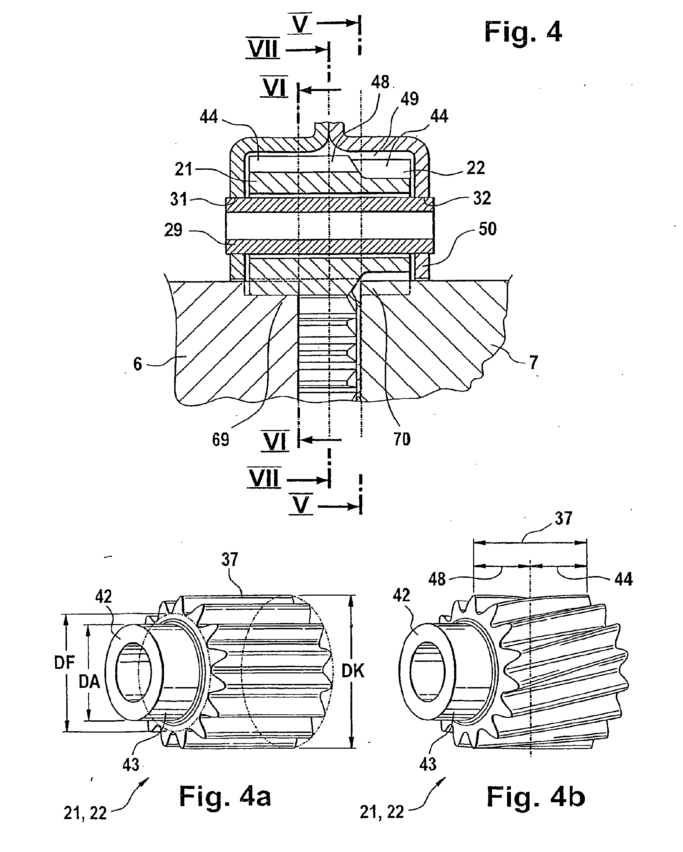

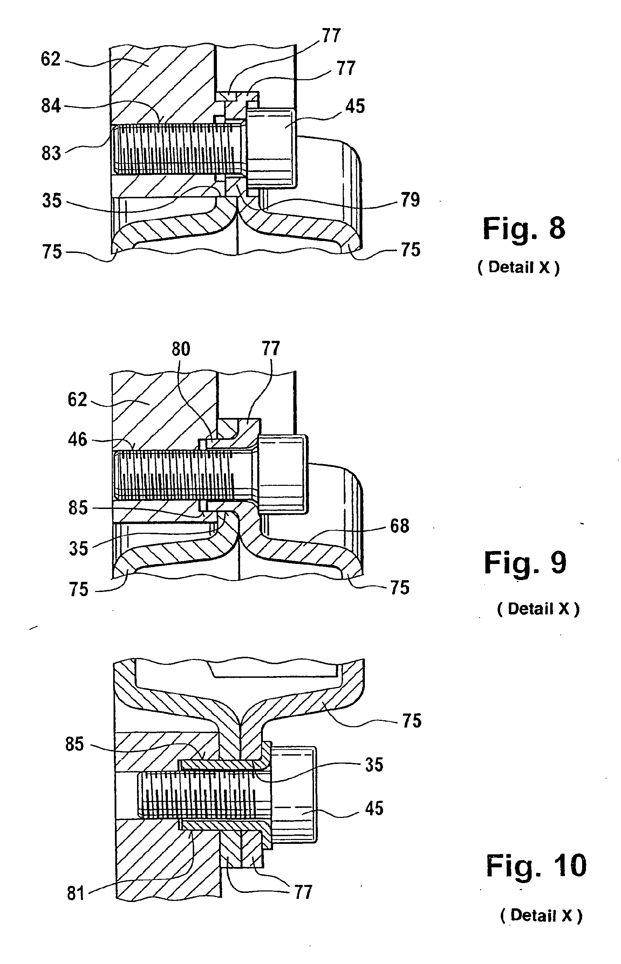

Das Gehäuse 68 ist entweder aus zwei *sich unterscheidenden (siehe* *Figuren 8 und 9**)* oder aus zwei identischen Gehäuseabschnitten 75 (Figur 10) gebildet und ist die Summenwelle 50. Die Gehäuseabschnitte 75 sind im wesentlichen topfförmig ausgebildet und mit einem Radialflansch 77 versehen. Die topfförmigen Gehäuseabschnitte 75 sind vorzugsweise Kaltumformteile, z. B. Zieh- und Stanzteile aus dünnem Blech. Jeder der Gehäuseabschnitte 75 weist Aufnahmen 31 und 32 (Figur 4) für Planetenbolzen 29 und 30 (Figuren 4 5 und 6) auf.

Stirnseitig des Gehäuses *68* ist der Boden 65 des jeweiligen Gehäuseabschnitts ausgebildet. In den einander gegenüberliegenden Böden 65 sind die Planetenräder 21 und 22 gelagert. Der Topf 76 des jeweiligen Gehäuseabschnitts 75 ist am Umfang an mehreren Stellen nach innen in Richtung der Drehachse 4 eingeformt (Figur 3), so dass jeweils zwischen zwei umfangsseitig zueinander benachbarten Paaren aus Planetenrädern 21 und 22 durch gewölbten Wandabschnitte 64 begrenzte radiale Einzüge 78 am Topf 76 entstehen. Die Form des Topfes 76 erinnert in der Ansicht nach Figur 3 an ein vierblättriges Kleeblatt. Der Radialflansch 77 erstreckt sich mit den Flanschabschnitten 63 in Richtung der Drehachse 4 bis in die Einzüge 78 und weist dort die Durchgangslöcher 35 für die Befestigung der Gehäuseabschnitte 75 aneinander und für die Befestigung des Antriebsrads 67 an dem Gehäuse 68 auf. Das Antriebsrad weist dazu radiale Befestigungsabschnitte 62 auf, die jeweils zumindest teilweise in einen der Einzüge 78 eintauchen. Befestigungselemente wie Schrauben 45 sind zumindest teilweise umfangsseitig zwischen zwei benachbarten Paaren aus Planetenrädern 21 und 22 angeordnet.

Die Anordnung der Summenwelle und der Differenzwellen entspricht der nach Figur 1.

In den Figuren 4, 4a, 4b bis 7 sind die Einzelheiten des Zahneingriffs der Planetenräder 21 und 22 beschrieben. Jedes der Planetenräder 21 und 22 ist separat auf dem Planetenbolzen 29 bzw. 30 gleit- oder wälzgelagert. Die Planetenräder 21 und 22 eines Paares stehen über die verzahnten Abschnitte 37 miteinander im Zahneingriff. Jedes der Planetenräder 21 und 22 eines Paares kämmt außerdem jeweils mit einem anderen der zwei als Sonnenrad *69* und *70* ausgebildeten Abtriebsräder 6 bzw. 7 als das andere Planetenrad 21 bzw. 22 des gleichen Paares.

Figur 4 zeigt der Planetenräder 21 und 22 in die Außenverzahnung 51 beziehungsweise 52 der Sonnenräder 69, 70 des Stirnradgetriebes 66. Die Planetenräder 21 und 22 sind identisch zueinander ausgebildet und sind abgesetzt gestaltet. Figur 4a und 4b zeigen jeweils ein Planetenrad 21 beziehungsweise 22 als Einzelteil entweder mit Geradverzahnung oder mit Schrägverzahnung. Sie weisen einen vorwiegend zylindrisch ausgebildeten nicht verzahnten Abschnitt 43 auf, dessen Außendurchmesser DA geringer ist als der Außendurchmesser verzahnten Abschnitts 37 am Kopfkreis DK. Der verzahnungsfreie Abschnitt 43 und der verzahnte Abschnitt 37 (mit einer Verzahnung versehene Abschnitt) sind unmittelbar zueinander benachbart. Der Außendurchmesser DA des nicht verzahnten Abschnitts 43 ist vorzugsweise auch kleiner als der Fußkreisdurchmesser *DF* der Verzahnung des verzahnten Abschnitts 37.

Die Planetenräder 21 und 22 eines Paares sind so auf dem Planetenbolzen 29 und 30 angeordnet, dass die nicht verzahnten Abschnitte 43 der Planetenräder 21, 22 längs in entgegengesetzte Richtung weisen. Die Stirnseiten der nicht verzahnten Abschnitte 43 weisen jeweils längs nach außen, vorzugsweise zu den Aufnahmen 31, 32 für die Planetenbolzen 29 und 30 im Gehäuse 68.

Jedes der Planetenräder 21, 22 eines Paares greift jeweils mit einem in Längsrichtung am Planetenrad 21, 22 außen liegenden Teilabschnitt 44 seines verzahnten Abschnitts 37 in die Verzahnung eines anderen Abtriebrads 6, 7 des Differenzials ein. In diesem ist die Verzahnung der Abtriebsräder 6 und 7 eine Außenverzahnung 51 beziehungsweise 52 an den Sonnenrädern 69 und 70. Der außen liegende Teilabschnitt 44 (äußerer Teilabschnitt) erstreckt sich gleichgerichtet mit der Bolzenachse 29, von einem Ende des Planetenrades 21 bzw. 22 aus bis an einen, in Längsrichtung betrachtet, innen liegenden Teilabschnitt 48 (mittlerer Teilabschnitt) des verzahnten Abschnitts 37 (siehe auch Figur 4b). In Figur 4 ist das Planetenrad 21 geschnitten im Vordergrund dargestellt. Von dem Planetenrad 22 ist nur der außen liegende Teilabschnitt 44 durch die Umfangslücke 49 hindurch zu erkennen. Die Umfangslücke 49 umgibt in dieser Ansicht den nicht verzahnten Abschnitt 43 des Planetenrades 21. Der außen liegende verzahnte Teilabschnitt 44 ist in etwa so breit wie der radiale Absatz 72 mit Außenverzahnung 51 beziehungsweise 52 und muss nur so breit sein, wie die Außenverzahnung 51 längs breit ist. Der mittlere verzahnte Teilabschnitt 48 ist so breit wie der axiale Abstand zwischen den radialen Absätzen 60 der Sonnenräder 69 und 70.

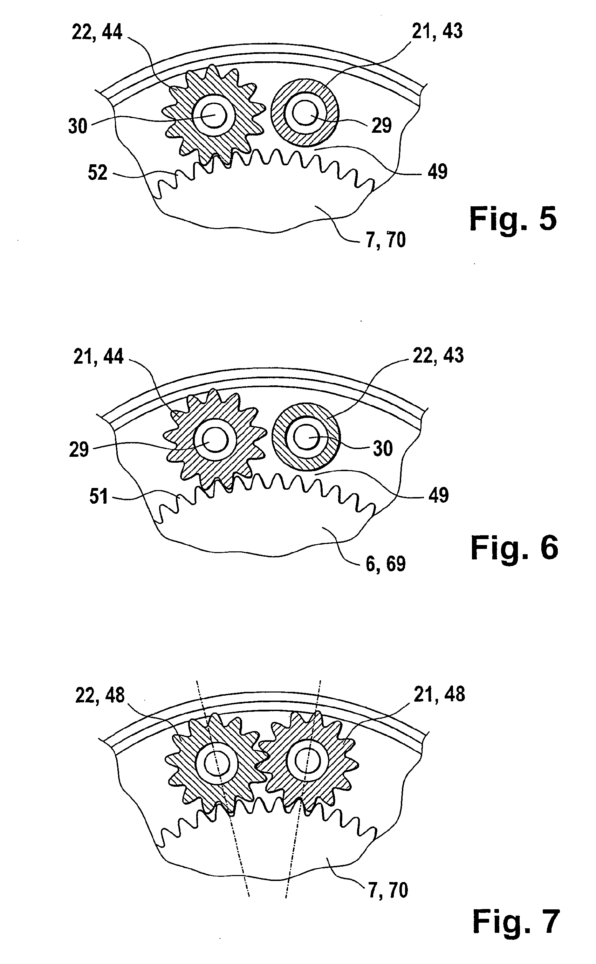

Figur 5 ist eine Schnittdarstellung entlang der Linie V-V in Figur 4 und damit eine Darstellung des Zahneingriffs an der in Figur 4 rechten Seite des jeweiligen Stirnraddifferenzials 66. Das Planetenrad 22 ist mit dem außen liegenden Teilabschnitt 44 mit der Außenverzahnung 52 des Sonnenrads 70 verzahnt. Der nicht verzahnte Abschnitt 43 des Planetenrades 21 steht rechts in Figur 4 mit dem Sonnenrad 70 nicht im Eingriff. Die Außenverzahnung 52 des Sonnenrads 70 taucht an dieser Stelle in den durch die Umfangslücke 49 entstandenen Freiraum so ein, dass die Außenverzahnung 52 den nicht verzahnten Abschnitt 43 gerade noch nicht berührt.

Figur 6 zeigt einen Schnitt entlang der Linie VI-VI in Figur 4 und damit eine Darstellung des Zahneingriffs an der linken Seite des Stirnraddifferenzials *66*. Das Planetenrad 21 kämmt mit dem außen liegenden Teilabschnitt 44 mit der Außenverzahnung 51 des Sonnenrads 69. Der nicht verzahnte Abschnitt 43 des Planetenrad 22 steht links in Figur 4 mit dem Sonnenrad 69 nicht im Eingriff. Die Außenverzahnung 51 des Sonnenrads 69 taucht an dieser Stelle in den durch die Umfangslücke 49 entstandenen Freiraum so ein, dass die Außenverzahnung 51 den nicht verzahnten Abschnitt 43 gerade noch nicht berührt.

Figur 7 zeigt einen Schnitt entlang der Linie VII-VII und damit eine Darstellung des Zahneingriffs im mittleren Bereich des jeweiligen Stirnraddifferenzials 66 nach Figur 4. Es ist dargestellt, wie die innen liegenden verzahnten Teilabschnitte 48 der Planetenräder 21 und 22 eines Paares miteinander kämmen. In der Darstellung ist zwar auch das Sonnenrad 70 zu sehen, es steht jedoch nicht mit den Teilabschnitten 48 im Zahneingriff. Das Sonnenrad 70 ist in dieser Darstellung in die Bildebene senkrecht hinein nach den verzahnten Teilabschnitten 48 angeordnet. Der mittlere Teilabschnitt 48 ist in Längsrichtung zwischen dem äußeren Teilabschnitt 44 des mit Zähnen versehenen Abschnitts 37 und dem Abschnitt 43 ohne Zähne ausgebildet (siehe auch Fig. 4a).

Für alle zuvor genannten Ausführungen der Befestigung der Gehäuseabschnitte 75 aneinander sind alternativ an einem der Gehäuseabschnitte 75 oder wechselseitig an beiden Gehäuseabschnitten 75 anstelle der Durchgangslöcher 35 (in Figuren 8-10) umfangsseitig zylindrische Führungszapfen 79, 80 und 81 angeordnet. Derartige Verbindungen sind in den Figuren 8, 9 und 10 dargestellt und nachfolgend beschrieben. Die Figuren 8, 9 und 10 sind vergrößerte und nicht maßstäbliche Darstellungen der Details X nach Figur 2. Die bevorzugt innen hohlzylindrischen Führungszapfen 79, 80, 81 stehen axial aus dem Radialflansch 77 in Richtung des anderen Gehäuseabschnitts hervor.

Figur 8 zeigt einen stanzgezogenen Führungszapfen 79, dessen axiale Dicke im wesentlichen der Blechdicke des Radialflansches 77 entspricht. Es sind mehrere der Führungszapfen umfangsseitig des Gehäuseabschnitts 75 angeordnet. Der Führungszapfen 79 ist einteilig mit dem Radialflansch 77 des betreffenden Gehäuseabschnitts 75 und aus dessen Material ausgebildet.

Jeder der Führungszapfen 79 ragt in etwa bis zur Hälfte in ein Durchgangsloch 35 des gegenüberliegenden Radialflansches 77 hinein. In die andere Hälfte des Durchgangsloches 35 ragt ein weiterer Führungszapfen 82 hinein, der an dem Befestigungsabschnitt 62 des Antriebsrad 67 ausgebildet ist. Beide Führungszapfen 79 und 82 sind hohl. Dem Führungszapfen 82 schließt sich an der von dem Führungszapfen 79 abgewandten Seite ein Durchgangsloch 83 beziehungsweise eine Gewindebohrung mit Innengewinde 84 an. Die Gehäuseabschnitte 75 und das jeweilige Antriebsrad sind mittels eines Befestigungselementes in diesem Fall in Form einer Schraube 45 axial miteinander befestigt.

In dem mit Figur 9 dargestellten Ausführungsbeispiel der Erfindung greift jeder Führungszapfen 80 durch ein Durchgangsloch 35 eines Lochflansches an dem anderen der Gehäuseabschnitte 75 hindurch in ein Führungsloch 85 an dem Befestigungsabschnitt 62 des betreffenden Zahnrings ein. Der Führungszapfen 80 ist gezogen und einteilig mit dem Radialflansch 77 des betreffenden Gehäuseabschnitts 75 ausgebildet. Die im Querschnitt betrachtete Innenkontur des Führungslochs 85 in dem Zahnring korrespondiert passgenau mit der Außenkontur des Führungszapfens 80. Zahnring und Gehäuse 68 sind zueinander konzentrisch zur Drehachse 4 zentriert.

In dem Führungsloch 85 folgt auf den Führungsabschnitt ein Innengewinde 46 oder ein Durchgangsloch für die axiale Befestigung der Gehäuseabschnitte 75 mit dem Zahnring mittels Schraub- oder Nietverbindung.

Der Führungszapfen 81 in der Darstellung nach Figur 10 ist eine separate Hülse, die in dem Radialflansch 77 des betreffenden Gehäuseabschnitts 75 befestigt ist. Jeder Führungszapfen 81 greift durch ein Durchgangsloch 35. eines Lochflansches an dem anderen der Gehäuseabschnitte 75 hindurch in ein Führungsloch 85 des betreffenden Zahnrings ein. Die im Querschnitt betrachtete Innenkontur des Führungslochs 85 in dem Zahnring korrespondiert passgenau mit der Außenkontur des Führungszapfens 81. Zahnring und Gehäuse 68 sind zueinander konzentrisch zur Drehachse 4 zentriert und mit einer Schraube 45 axial aneinander befestigt.

### Bezugszahlenliste

- 4: Drehachse
- 5: Planetenträger
- 6: Abtriebsrad
- 7: Abtriebsrad
- 14: Planetenrad
- 15: Planetenrad
- 16: Bolzenachse
- 17: Bolzenachse
- 21: Planetenrad
- 22: Planetenrad
- 29: Planetenbolzen
- 30: Planetenbolzen
- 31: Aufnahme für Planetenbolzen
- 32: Aufnahme für Planetenbolzen
- 35: Durchgangsloch im Radialflansch
- 36: Stirnraddifferenzial des gattungsbildenden Standes der Technik.
- 37: verzahnter Abschnitt des Planetenrads
- 40: Sonnenrad
- 41: Sonnenrad
- 43: nicht verzahnter Abschnitt des Planetenrads
- 44: äußerer Teilabschnitt des verzahnten Abschnitts
- 45: Schraube
- 46: Innengewinde
- 48: mittlerer Teilabschnitt des verzahnten Abschnitts
- 49: Umfangslücke
- 50: Summenwelle
- 51: Außenverzahnung des Sonnenrads
- 52: Außenverzahnung des Sonnenrads
- 62: Befestigungsabschnitt
- 63: Flanschabschnitt
- 64: gewölbte Wandabschnitte
- 65: Boden des Topfes
- 66: Stirnraddifferential
- 67: Antriebsrad
- 68: Gehäuse
- 69: Sonnenrad
- 70: Sonnenrad
- 71: hohlzylindrische Abschnitt des Sonnenrades.
- 72: Hohlzylindrische Abschnitt des Sonnenrades
- 73: Wälzlager
- 74: Wälzlager
- 75: Gehäuseabschnitt
- 76: Topf
- 77: Radialflansch
- 78: radialer Einzug im Topf
- 79: Führungszapfen
- 80: Führungszapfen
- 81: Führungszapfen
- 82: Führungszapfen
- 83: Durchgangsloch
- 84: Innengewinde
- 85: Führungsloch

## Patentansprüche

1. Stirnraddifferenzial (66) mit einem als Summenwelle (50) ausgebildeten und um eine längs ausgerichtete Drehachse (4) drehbaren Gehäuse (68) und mit wenigstens drei um die Drehachse (4) umfangsseitig zueinander beabstandeten Planetenrädern (21, 22) und mit einem Antriebsrad (67) an dem Gehäuse (68), wobei
- das Gehäuse (68) zumindest aus zwei aneinander befestigten Gehäuseabschnitten (75) gebildet ist,
- jedes der Planetenräder (21, 22) längs beidseitig in den Gehäuseabschnitten (75) gelagert ist,
- wenigstens einer der Gehäuseabschnitte (75) topfförmig ausgebildet ist, wobei der Gehäuseabschnitt (75) aus einem Topf (76) mit einem gehäusestirnseitigen Boden (65), aus einer vom Boden (65) abgehenden und um die Drehachse (4) verlaufenden Wand gebildet ist
- jedes der Planetenräder (21, 22) längs an einer Seite an dem Boden (65) des Topfes (76) gelagert ist,
***dadurch gekennzeichnet, dass*** die Wand des Topfes (76) wenigstens zwei radial nach innen gewölbte Wandabschnitte (64) aufweist, die radial jeweils zumindest teilweise in eine Umfangslücke zwischen zwei umfangsseitig benachbarten der Planetenrädern (21, 22) eintauchen, *wobei* zumindest in der Umfangslücke jeweils ein Flanschabschnitt (63) radial von den gewölbten Abschnitten (64) abgeht, und wobei von dem Antriebsrad (67) radial nach innen abgehende Befestigungsabschnitte (62) zumindest teilweise radial in die Umfangslücke eintauchen und an dem Flanschabschnitt (63) fest sind.

2. Stirnraddifferenzial nach Anspruch 1, ***dadurch gekennzeichnet, dass*** der Flanschabschnitt (63) ein längs gerichtetes Durchgangsloch (35) aufweist, durch dass ein Befestigungsmittel hindurch in den Befestigungsabschnitt (62) hinein greift.

3. Stirnraddifferenzial nach Anspruch 2, ***dadurch gekennzeichnet, dass*** das Befestigungsmittel eine Schraube (45) ist, wobei die Schraube (45) in ein Innengewinde (46) in dem Befestigungsabschnitt (62) eingreift.

4. Stirnraddifferential nach Anspruch 1, ***gekennzeichnet durch*** wenigstens zwei der topfförmigen Gehäuseabschnitte (75), die spiegelbildlich zueinander axial aneinander befestigt sind, wobei das Antriebsrad (67) an einem der Gehäuseabschnitte (75) axial fest ist.

5. Stirnraddifferenzial, nach Anspruch 4, ***dadurch gekennzeichnet, dass*** die Gehäuseabschnitte (75) Gleichteile sind.

6. Stirnraddifferential nach Anspruch 1, ***gekennzeichnet durch*** wenigstens vier Paare von Planetenrädern (21, 22), von denen die Planetenräder (21, 22) in jedem Paar miteinander verzahnt sind und von denen jedes Planetenrad (21, 22) eines Paares in ein anderes Sonnenrad (69, 70) eingreift als das andere Planetenrad (21, 22) des gleichen Paares, wobei die Sonnenräder (69, 70) zumindest teilweise in dem Topf (76) angeordnet sind und wobei jeweils einer der Befestigungsabschnitte (62) des Antriebsrads (67) in jeweils eine Umfangslücke zwischen zwei umfangsseitig zueinander benachbarten der Paaren zumindest teilweise radial eintaucht und dort an dem Flanschabschnitt (63) befestigt ist.

## Claims

1. Spur gear differential (66) having a housing (68) which is designed as a summing shaft (50) and which is rotatable about a longitudinally aligned axis of rotation (4), and having at least three planet gears (21, 22) which are circumferentially spaced apart from one another about the axis of rotation (4) and having a drive input gear (67) on the housing (68), wherein
- the housing (68) is formed at least from two housing portions (75) fastened to one another,
- each of the planet gears (21, 22) is mounted longitudinally at both sides in the housing portions (75),
- at least one of the housing portions (75) is of pot-shaped design, wherein the housing portion (75) is formed from a pot (76) with a base (65) at the housing end side and from a wall which projects from the base (65) and runs around the axis of rotation (4),
- each of the planet gears (21, 22) is mounted longitudinally at one side on the base (65) of the pot (76),
**characterized in that** the wall of the pot (76) has at least two radially inwardly arched wall portions (64) which protrude radially in each case at least partially into a circumferential gap between two circumferentially adjacent planet gears (21, 22), wherein in each case one flange portion (63) projects radially from the arched portions (64) at least in the circumferential gap, and wherein fastening portions (62) which project radially inward from the drive input gear (67) protrude at least partially radially into the circumferential gap and are fixed to the flange portion (63).

2. Spur gear differential according to Claim 1, **characterized in that** the flange portion (63) has a longitudinally aligned through hole (35) through which a fastening means extends into the fastening portion (62).

3. Spur gear differential according to Claim 2, **characterized in that** the fastening means is a screw (45), wherein the screw (45) engages into an internal thread (46) in the fastening portion (62).

4. Spur gear differential according to Claim 1, **characterized by** at least two pot-shaped housing portions (75) which are axially fastened to one another mirror-symmetrically with respect to one another, wherein the drive input gear (67) is axially fixed to one of the housing portions (75).

5. Spur gear differential according to Claim 4, **characterized in that** the housing portions (75) are identical parts.

6. Spur gear differential according to Claim 1, **characterized by** at least four pairs of planet gears (21, 22), wherein the planet gears (21, 22) in each pair mesh with one another and wherein each planet gear (21, 22) of a pair engages into a different sun gear (69, 70) than the other planet gear (21, 22) of the same pair, wherein the sun gears (69, 70) are arranged at least partially in the pot (76), and wherein in each case one of the fastening portions (62) of the drive input gear (67) protrudes at least partially radially into in each case one circumferential gap between two circumferentially adjacent pairs and is fastened there to the flange portion (63).

## Revendications

1. Différentiel à pignons droits (66) comprenant un boîtier (68) réalisé sous forme d'arbre additionneur (50) et pouvant tourner autour d'un axe de rotation (4) orienté longitudinalement et comprenant au moins trois pignons planétaires (21, 22) espacés les uns des autres sur la périphérie autour de l'axe de rotation (4) et un pignon d'entraînement (67) sur le boîtier (68),
- le boîtier (68) étant formé au moins de deux portions de boîtier (75) fixées l'une à l'autre,
- chacun des pignons planétaires (21, 22) étant supporté longitudinalement des deux côtés dans les portions de boîtier (75),
- au moins l'une des portions de boîtier (75) étant réalisée en forme de pot, la portion de boîtier (75) étant formée d'un pot (76) avec un fond du côté frontal du boîtier (65), et d'une paroi partant du fond (65) et s'étendant autour de l'axe de rotation (4),
- chacun des pignons planétaires (21, 22) étant supporté longitudinalement d'un côté sur le fond (65) du pot (76),
**caractérisé en ce que** la paroi du pot (76) présente au moins deux portions de paroi (64) cintrées radialement vers l'intérieur, qui plongent radialement à chaque fois au moins en partie dans un vide périphérique entre deux des pignons planétaires (21, 22) adjacents sur la périphérie, au moins une portion de bride (63) partant à chaque fois radialement depuis les portions courbes (64) dans le vide périphérique, et des portions de fixation (62) saillant radialement vers l'intérieur depuis le pignon d'entraînement (67) plongeant au moins en partie radialement dans le vide périphérique et étant fixées sur la portion de bride (63).

2. Différentiel à pignons droits selon la revendication 1, **caractérisé en ce que** la portion de bride (63) présente un trou de passage orienté longitudinalement (35), à travers lequel un moyen de fixation s'engage dans la portion de fixation (62) .

3. Différentiel à pignons droits selon la revendication 2, **caractérisé en ce que** le moyen de fixation est une vis (45), la vis (45) venant en prise dans un filetage interne (46) dans la portion de fixation (62).

4. Différentiel à pignons droits selon la revendication 1, **caractérisé par** au moins deux des portions de boiter en forme de pot (75), qui sont fixées axialement l'une contre l'autre comme une image inverse l'une de l'autre, le pignon d'entraînement (67) étant fixé axialement sur l'une des portions de boiter (75).

5. Différentiel à pignons droits selon la revendication 4, **caractérisé en ce que** les portions de boîtier (75) sont des pièces identiques.

6. Différentiel à pignons droits selon la revendication 1, **caractérisé par** au moins quatre paires de pignons planétaires (21, 22), dont les pignons planétaires (21, 22) dans chaque paire sont engrenés l'un dans l'autre, et dont chaque pignon planétaire (21, 22) d'une paire vient en prise dans une autre roue solaire (69, 70) que l'autre pignon planétaire (21, 22) de la même paire, les roues solaires (69, 70) étant disposées au moins en partie dans le pot (76) et à chaque fois l'une des portions de fixation (62) du pignon d'entraînement (67) plongeant au moins partiellement radialement dans un vide périphérique respectif entre deux paires adjacentes sur la périphérie, et y étant fixée à la portion de bride (63).
